# EUROPEAN PATENT SPECIFICATION

(11) **EP 3 534 129 B1**
(45) Date of publication and mention of the grant of the patent: **23.03.2022**
(21) Application number: 18189510.3
(22) Date of filing: 17.08.2018
(51) Int. Cl.: G01L 9/00

(54) **MEMS DEVICE**
MEMS-VORRICHTUNG
DISPOSITIF MEMS

(30) Priority: 02.03.2018 JP 2018037719
(43) Date of publication of application: 04.09.2019
(73) Proprietor: Kabushiki Kaisha Toshiba, Minato-ku Tokyo 105-8001 (JP)
(72) Inventor: Kurui, Yoshihiko, Tokyo (JP); Fujimoto, Akira, Tokyo (JP); Tomizawa, Hideyuki, Tokyo (JP); Saito, Tomohiro, Tokyo (JP); Kojima, Akihiro, Tokyo (JP)
(74) Representative: Hoffmann Eitle

(56) References cited:
- US-A1- 2007 190 680
- US-A1- 2009 146 227
- US-A1- 2010 112 743

## Description

### FIELD

The present disclosure relates to a MEMS device in which the micro-electromechanical systems (MEMS) technique is used.

### BACKGROUND

In recent years, low power consumption MEMS sensors have been used for the Internet of Things (IoT). Above all, MEMS pressure sensors comprising diaphragms having MEMS structures as movable electrodes have attracted attention. Regarding this type of sensor, it is required to further reduce the amount of power consumed.

Exemplary MEMS devices of the prior art can be seen in document US 2007/190680 A1, US 2009/146227 A1 and US 2010/112743 A1.

### BRIEF DESCRIPTION OF THE DRAWINGS

FIG. 1 is a plan view showing a schematic structure of a MEMS pressure sensor according to a first arrangement.
FIGS. 2A and 2B are cross-sectional views seen in the arrow directions I-I' and II-II' of FIG. 1.
FIGS. 3A and 3B are schematic views for explaining parasitic capacitance in the MEMS pressure sensor of FIG. 1.
FIGS. 4A to 4F are cross-sectional views showing manufacturing steps of the MEMS pressure sensor according to the first arrangement.
FIG. 5 is a cross-sectional view showing a schematic structure of a MEMS pressure sensor according to a second arrangement.
FIG. 6 is a plan view showing a schematic structure of a MEMS pressure sensor according to a third arrangement, which does not fall within the scope of the claimed invention.
FIG. 7 is a cross-sectional view seen in the arrow direction III-III' of FIG. 6.

### DETAILED DESCRIPTION

The invention is defined in claim 1.

Preferred embodiments are defined in dependent claims 2-5.

A MEMS pressure sensor according to three arrangments will be described hereinafter with reference to the drawings, whereby the third arrangement does not fall within the scope of the claimed invention.

### (First Arrangement)

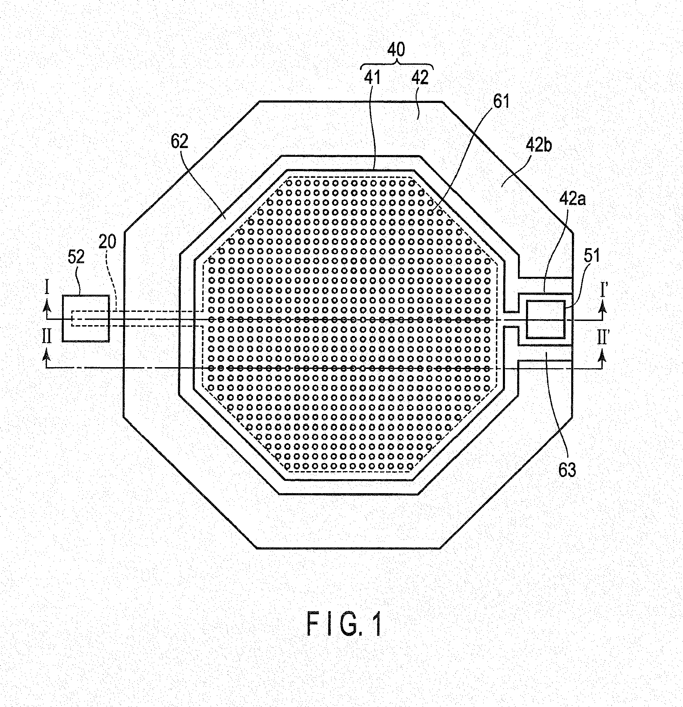

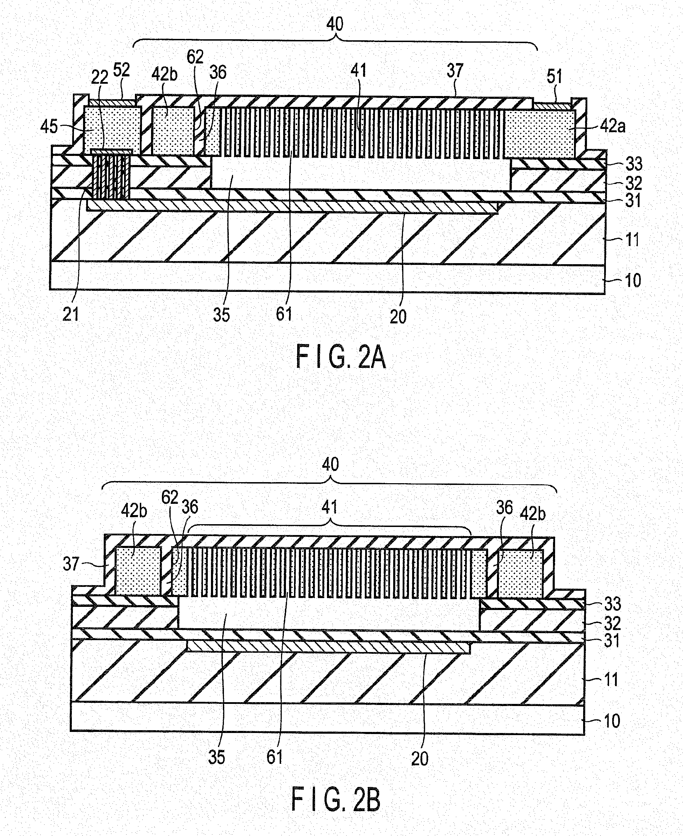

FIGS. 1, 2A and 2B are diagrams for explaining a schematic structure of a MEMS pressure sensor according to a first arrangement. FIG. 1 is a plan view, FIG. 2A is a cross-sectional view seen in the arrow direction I-I' of FIG. 1, and FIG. 2B is a cross-sectional view seen in the arrow direction II-II' of FIG. 1.

An interlayer insulating film 11 of SiO₂, etc., is provided on a semiconductor substrate 10 of Si, etc., and an octagonal fixed electrode (first electrode) 20 is provided on a surface portion of the interlayer insulating film 11. That is, the fixed electrode 20 is provided on one main surface side of a base substance comprising the semiconductor substrate 10 and the interlayer insulating film 11.

A first stopper insulating film 31 of SiN, etc., is provided on the interlayer insulating film 11 and the fixed electrode 20. A sacrificial layer (spacer insulating film) 32 formed of SiO₂, etc., is provided on the stopper insulating film 31. A second stopper insulating film 33 of SiN, etc., is provided on the sacrificial layer 32. The sacrificial layer 32 and the second stopper insulating film 33 are partly removed in accordance with the shape of a movable electrode, which will be described later. A cavity portion 35 is thereby formed.

An octagonal diaphragm movable electrode (second electrode) 40 formed of SiGe is provided on the stopper insulating film 33. This movable electrode 40 comprises a movable portion 41 in the center and an anchor portion 42 supporting the movable portion 41 on its periphery. The anchor portion 42 is fixed on the stopper insulating film 33. The movable portion 41 is thereby separated from and opposed to the fixed electrode 20. In addition, fine holes 61 for removing the sacrificial layer 32 are provided at a constant pitch in the central movable portion 41 of the movable electrode 40.

The anchor portion 42 includes a first region 42a and a second region 42b. An electrode pad 51 for a movable electrode is provided in the first region 42a of the anchor portion 42. A slit 62 is formed in the movable electrode 40 to surround the movable portion 41 except the first region 42a, where the electrode pad 51 is provided. Moreover, a slit 63 for isolating the first region 42a of the anchor portion 42 from the other second region 42b is formed in the movable electrode 40. In addition, an insulating film 36 of SiO₂, SiN, etc., is embedded in the slits 62 and 63. Further, a protective insulating film 37 of SiO₂, etc., is provided to cover the movable electrode 40.

In the figures, 21 represents a through electrode connected to the fixed electrode 20, 22 represents an electrode pad, 45 represents an electrode extraction portion formed at the same time the movable electrode 40 is formed, and 52 represents an electrode pad for a fixed electrode.

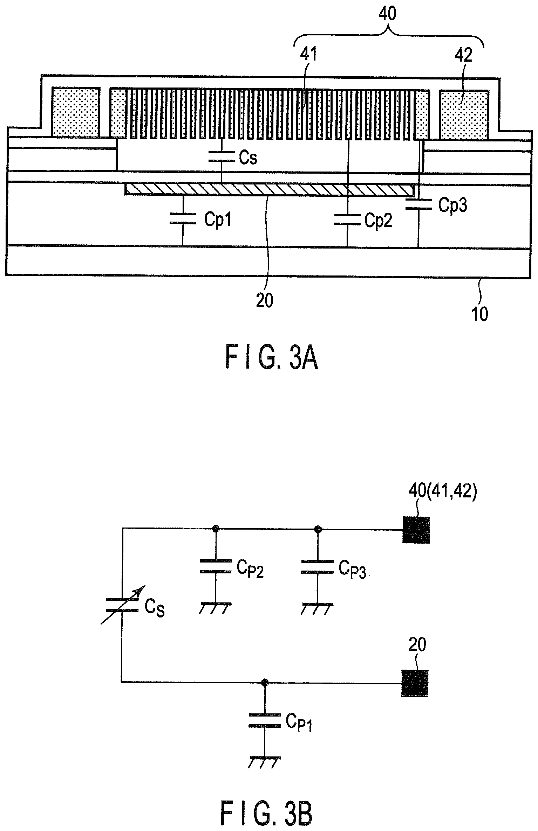

In the structure of the first arrangement, as shown in FIG. 3A, parasitic capacitance is produced in each portion, in addition to interelectrode capacitance Cs between the fixed electrode 20 (lower electrode) and the movable electrode 40 (upper electrode). Thus, an equivalent circuit is as shown in FIG. 3B. Cp1 represents the parasitic capacitance of the fixed electrode 20, Cp2 represents the parasitic capacitance of the movable portion 41 of the movable electrode 40, and Cp3 represents the parasitic capacitance of the anchor portion 42 of the movable electrode 40.

If sensing is performed by the upper electrode as in the case of the first arrangement, the operational power consumption is proportional to the parasitic capacitance of the upper electrode and the interelectrode capacitance as follows:
Operational power consumption ∝ (Cs+Cp2+Cp3)V2

Thus, if the parasitic capacitance Cp3 of the anchor portion 42 is large, the power consumption will be increased.

According to the invention, the anchor portion 42 is provided with the slits 62 and 63, and the insulating film 36 is embedded in the slits 62 and 63. Most of the anchor portion 42 is thereby electrically insulated from the movable portion 41. That is, the second region 42b of the anchor portion 42 is insulated from the movable portion 41. Thus, the parasitic capacitance Cp3 of the anchor portion 42 includes only the capacitance between the first region 42a of the anchor portion 42 and the semiconductor substrate 10, and the parasitic capacitance Cp3 can be made extremely small. Accordingly, in the structure in which sensing is performed by the upper electrode, an increase in power consumption due to the parasitic capacitance of the anchor portion 42 can be suppressed. The amount of power consumed thereby can be reduced.

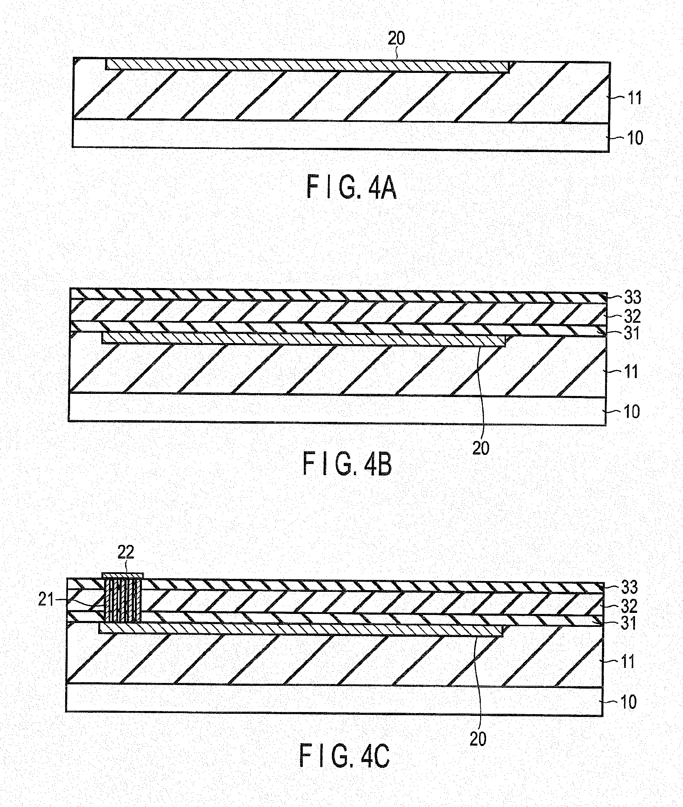

Manufacturing steps of the MEMS pressure sensor of the first arrangement are shown in FIGS. 4A to 4F.

First, as shown in FIG. 4A, the interlayer insulating film 11 (having a thickness of 5 µm) of SiO₂, etc., is deposited on the semiconductor substrate 10 of Si, etc., by the CVD method or the like. Then, the fixed electrode 20 (having a thickness of 0.2 pm) of Al, etc., is formed on a surface portion of the interlayer insulating film 11. To be specific, the surface portion of the interlayer insulating film 11 is shallowly etched to form an octagonal concave portion, and then an aluminum film is deposited by sputtering or the like. Then, the aluminum film outside the concave portion is removed by CMP, and the fixed electrode 20 is thereby formed at the same height as the surface of the interlayer insulating film 11.

Subsequently, as shown in FIG. 4B, the first stopper insulating film 31 of SiN, etc., the sacrificial layer (insulating film) 32 of SiO₂, and the second stopper insulating film 33 of SiN, etc., are formed on the interlayer insulating film 11 and the fixed electrode 20 in order. Here, the stopper insulating films 31 and 33 are 0.2 µm in thickness, and the sacrificial layer 32 is 2 µm in thickness.

Subsequently, as shown in FIG. 4C, a contact hole is formed in the insulating films 31, 32 and 33 outside the region where the upper movable electrode is formed, and metal is embedded in the contact hole. The through electrode 21 is thereby formed. Then, the electrode pad 22 connected to the through electrode 21 is formed on the stopper insulating film 33.

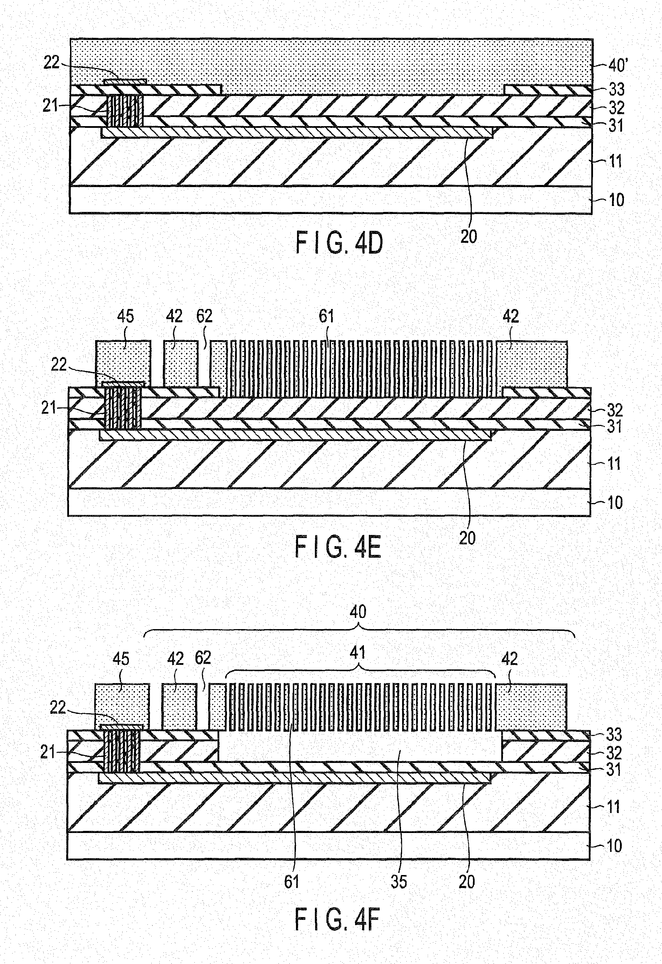

Subsequently, as shown in FIG. 4D, a part of the stopper insulating film 33 is removed in accordance with the movable portion of the movable electrode, which will be described later. Then, an SiGe layer 40' is deposited on the stopper insulating film 33, the sacrificial layer 32, and the pad 22 by the CVD method or the like. The SiGe layer 40' is thicker than the sacrificial layer 32, and is, for example, 10 µm in thickness.

Subsequently, as shown in FIG. 4E, the SiGe layer 40' is provided with the fine holes 61, and provided with the slits 62 and 63 for isolating the movable portion 41 and a part of the anchor portion 42. Moreover, the surrounding SiGe layer 40' is removed except for the portion where the electrode extraction portion 45 connected to the lower fixed electrode 20 is provided. The fine holes 61, the slits 62 and 63, and the electrode extraction portion 45 can be formed at the same time by the RIE method.

Subsequently, as shown in FIG. 4F, hydrofluoric acid vapor processing is performed, and the sacrificial layer 32 is removed through the fine holes 61 of the movable portion 41. The cavity portion 35 is thereby formed. Here, if the pitch of the fine holes 61 of the movable portion 41 is sufficiently small, adjacent holes provided in the sacrificial layer 32 communicate with each other. Thus, a part of the sacrificial layer 32, which is located under the movable portion 41, is all removed.

Thereafter, an insulating film, such as a nitride film or an oxide film, is formed by the CVD method. The insulating film 36 is thereby embedded in the slits 62 and 63, and its surface is further covered by the insulating film 37. To be specific, an insulating film is thickly deposited to be embedded in the entire slits 62 and 63 provided in the anchor portion 42, and then is thinned by CMP until the insulating film covering the movable electrode 40 has a desired thickness. Alternatively, after the insulating film is removed by CMP until the movable electrode 40 is exposed, a protective insulating film may be formed again. Then, the electrode pads 51 and 52 are formed. The structure shown in FIGS. 1, 2A and 2B is thereby completed.

In this manner, the slits 62 and 63 are provided in the anchor portion 42 of the diaphragm movable electrode 40, and the insulating film 36 of SiO₂, SiN, etc., is embedded in the slits 62 and 63. A part of the anchor portion 42 thereby can be electrically insulated from the movable portion 41. Thus, the parasitic capacitance of the anchor portion 42 can be reduced. Therefore, the amount of power consumed when being used as a MEMS sensor can be reduced.

Further, in terms of a manufacturing process, it suffices if the slits 62 and 63 in the anchor portion 42 are provided at the same time the fine holes 61 for removing a sacrificial layer is formed in the movable portion 41. Accordingly, the process does not particularly increase to provide the slits 62 and 63 in the anchor portion 42. Moreover, the insulating film 36, which is embedded in the slits 62 and 63 of the anchor portion 42, can be formed at the same time the insulating film 37 covering the movable electrode 40 is formed. Accordingly, the process does not increase to form the embedded insulating film 36.

### (Second Arrangement)

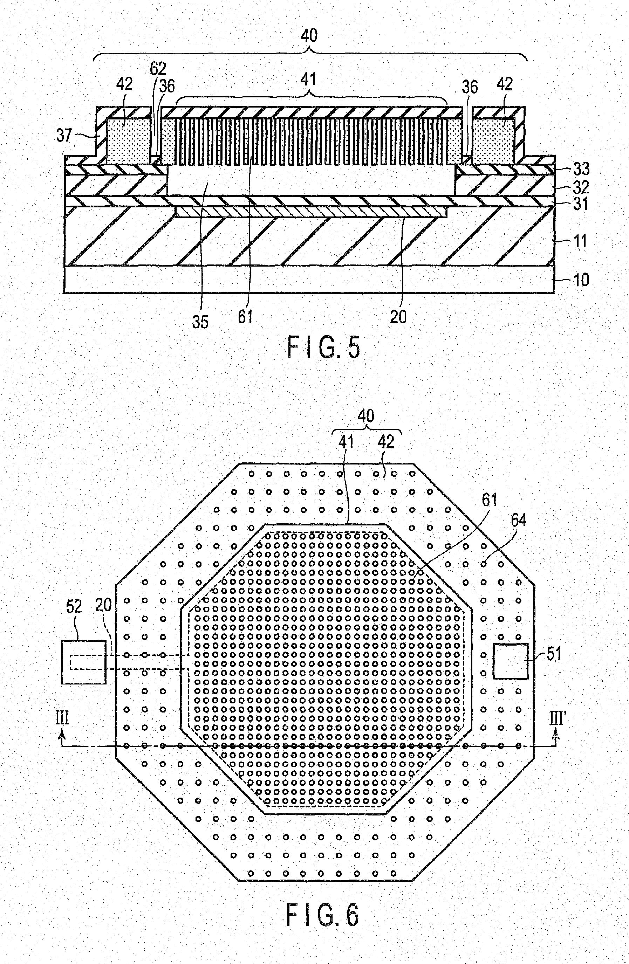

FIG. 5 is a cross-sectional view showing a schematic structure of a MEMS pressure sensor according to a second arrangement. FIG. 5 corresponds to the cross-section of FIG. 2B. The same portions as those of FIG. 2B will be given the same reference numbers as those of FIG. 2B, and detailed descriptions thereof will be omitted.

A difference between the second arrangement and the first arrangement, which has been already described, lies in the thickness of an insulating film 36, which is embedded in a slit 62 for electrically isolating a movable portion 41 and an anchor portion 42 from each other. The difference also lies in a slit 63 for electrically isolating a first region 42a and a second region 42b of the anchor portion 42.

In the first arrangement, in order that the insulating film 36 is embedded in the entire slits 62 and 63, an SiO₂ film is sufficiently thickly formed to be thicker than an SiGe layer 40', and then is flattened by CMP. In the second arrangement, an SiO₂ film is deposited to have a thickness corresponding to the thickness of a protective film 37. In this case, the insulating film 36 is not embedded in the entire slits 62 and 63, but embedded only in portions near the bottoms. Even though the insulating film 36 is embedded only in the portions near the bottoms of the slits 62 and 63, the structure comprising the movable portion 41, the anchor portion 42, and the embedded insulating film 36 can be used as a movable electrode 40, as long as a sufficient strength of the anchor portion 42 is maintained.

In this manner, in the second arrangement, the second region 42b of the anchor portion 42 is electrically isolated from the movable portion 41 and the first region 42a of the anchor portion 42 as in the case of the first arrangement. Therefore, the same advantage as that of the first arrangement can be obtained. In addition, a deposition thickness of SiO₂ for forming the insulating film 36 can be reduced, and further, the necessity for CMP can be obviated. Therefore, the present arrangement is advantageous also in that the manufacturing steps can be simplified as compared to the first arrangement.

### (Third Arrangement)

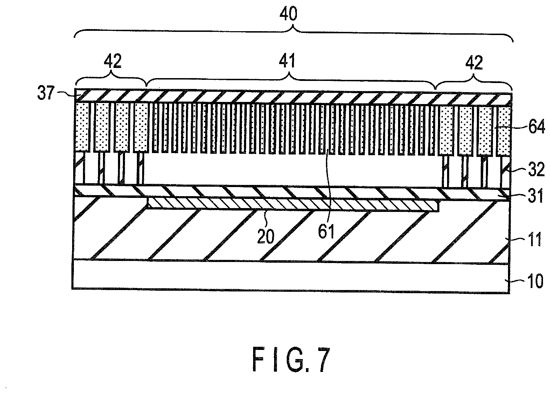

FIGS. 6 and 7 are diagrams for explaining a schematic structure of a MEMS pressure sensor according to a third arrangement, which does not fall within the scope of the claimed invention. FIG. 6 is a plan view, FIG. 7 is a cross-sectional view seen in the arrow direction III-III' of FIG. 6. The same portions as those of FIGS. 1, 2A and 2B will be given the same numbers as those of FIGS. 1, 2A and 2B, and detailed explanations thereof will be omitted.

A difference between the third arrangement and the first arrangement, which has been already described, lies in that holes are provided in an anchor portion 42 instead of insulating a part of the anchor portion 42 from a movable portion 41. The planar area of the anchor portion 42, that is, the area opposed to a semiconductor substrate 10, is thereby reduced.

Although the basic structure is the same as that of the first arrangement, a second stopper insulating film 33 is omitted in the third arrangement. In addition, when fine holes 61 for removing a sacrificial layer are provided in the movable portion 41, fine holes 64 are also provided in the anchor portion 42. Here, the pitch of the fine holes 64 of the anchor portion 42 is longer than that of the fine holes 61 of the movable portion 41.

In the movable portion 41, since the pitch of the fine holes 61 is short, adjacent holes provided in a sacrificial layer 32 communicate with each other. In the anchor portion 42, since the pitch of the fine holes 64 is long, adjacent holes provided in the sacrificial layer 32 do not communicate with each other. Under the anchor portion 42, holes that are greater in diameter than the fine holes 64 of the anchor portion 42 are formed in the sacrificial layer 32.

In this manner, in the third arrangement, since the fine holes 64 are provided in the anchor portion 42, the planar area of the anchor portion 42 can be reduced. Moreover, since the holes are also provided in the sacrificial layer 32 between the anchor portion 42 and a stopper insulating film 31, a dielectric constant in an interelectrode insulator can be lowered. Thus, the parasitic capacitance of the anchor portion 42 can be reduced. Therefore, the same advantage as that of the first arrangement can be obtained.

## Claims

1. A MEMS device, comprising:
a first electrode (20) which is a fixed electrode and is provided on one main surface side of a base substance; **characterized by**
a second electrode (40) comprising a movable portion (41) and an anchor portion (42) surrounding the movable portion and supporting the movable portion (41) on the periphery of the movable portion, the anchor portion (42) being fixed on the base substance, the movable portion (41) being separated from and opposed to the first electrode (20), a part (42b) of the anchor portion (42) being electrically insulated from the movable portion (41),
wherein the anchor portion (42) comprises a first region (42a) electrically connected to the movable portion (41) and a second region (42b) electrically insulated from the movable portion (41) and the first region (42a), and the movable portion (41) and the anchor portion (42) are of a same conductive material, and
slits (62, 63) for insulating the second region (42b) from the movable portion (41) and the first region (42a) are provided in the anchor portion (42), insulating film (36) being 25 embedded in the slits (62, 63),
one slit (62) of the plurality of slits (62, 63) surrounds the movable portion (41) except the first region (42a),
and at least one other slit (63) of the plurality of slits (62, 63) electrically insulates the first region (42a) from the second region 42b)
an electrode pad (51) is provided in the first region (42a).

2. The MEMS device of Claim 1, Z **characterized in that** the second electrode (40) comprises holes (61) perpendicular to one main surface of the base substance in the movable portion (41).

3. The MEMS device of any one of Claim 1 or Claim 2, **characterized in that** the second electrode (40) is SiGe.

4. The MEMS device of any one of Claim 1 to Claim 3, **characterized in that** a protective insulating film (37) is further provided on the second electrode (40).

5. The MEMS device of any one of Claim 1 to Claim 4, **characterized in that** the base substance comprises a semiconductor substrate (10) and an interlayer insulating film (11) provided on the semiconductor substrate (10).

## Patentansprüche

1. MEMS-Vorrichtung, umfassend:
eine erste Elektrode (20), welche eine feste Elektrode ist und auf einer Hauptoderflächenseite einer Basissubstanz vorgesehen ist; **gekennzeichnet durch**
eine zweite Elektrode (40), welche einen beweglichen Bereich (41) und einen Ankerbereich (42), der den beweglichen Bereich umgibt und den beweglichen Bereich (41) an der Peripherie des beweglichen Bereichs hält, umfasst, wobei der Ankerbereich (42) auf der Basissubstanz fixiert ist, der bewegliche Bereich (41) von der ersten Elektrode (20) getrennt und gegenüberliegend ist, ein Teil (42b) des Ankerbereichs (42) elektrisch vom beweglichen Bereich (41) isoliert ist,
wobei der Ankerbereich (42) eine erste Region (42a), die mit dem beweglichen Bereich (41) elektrisch verbunden ist, und eine zweite Region (42b), die vom beweglichen Bereich (41) und der ersten Region (42a) elektrisch isoliert ist, umfasst, und
der bewegliche Bereich (41) und der Ankerbereich (42) aus einem selben, leitfähigen Material bestehen, und
Schlitze (62, 63), zum Isolieren der zweiten Region (42b) gegenüber dem beweglichen Bereich (41) und der ersten Region (42a) in dem Ankerbereich (42) vorgesehen sind, wobei ein Isolierfilm (36) in die Schlitze (62, 63) eingebettet ist,
ein Schlitz (62) der Vielzahl von Schlitzen (62, 63) den beweglichen Bereich (41) außer der ersten Region (42a) umgibt,
und zumindest ein anderer Schlitz (63) der Vielzahl von Schlitzen (62, 63) die erste Region (42a) gegenüber der zweiten Region (42b) elektrisch isoliert,
ein Elektrodenpad (51) in der ersten Region (42a) vorgesehen ist.

2. MEMS-Vorrichtung nach Anspruch 1, **dadurch gekennzeichnet, dass** die zweite Elektrode (40) Löcher (61) rechtwinklig zu einer Hauptoberfläche der Basissubstanz im beweglichen Bereich (41) umfasst.

3. MEMS-Vorrichtung nach Anspruch 1 oder 2, **dadurch gekennzeichnet, dass** die zweite Elektrode (40) SiGe ist.

4. MEMS-Vorrichtung nach einem von Anspruch 1 bis 3, **dadurch gekennzeichnet, dass** weiter ein Schutzisolationsfilm (37) auf der zweiten Elektrode (40) vorgesehen ist.

5. MEMS-Vorrichtung nach einem von Anspruch 1 bis 4, **dadurch gekennzeichnet, dass** die Basissubstanz ein Halbleitersubstrat (10) und einen Zwischenschicht-Isolierfilm (11) umfasst, der auf dem Halbleitersubtrat (10) vorgesehen ist.

## Revendications

1. Dispositif à MEMS, comprenant :
une première électrode (20) qui est une électrode fixe et est fournie sur un côté de surface principale d'une substance de base ; **caractérisé par**
une seconde électrode (40) comprenant une portion mobile (41) et une portion d'ancrage (42) entourant la portion mobile et supportant la portion mobile (41) sur la périphérie de la portion mobile, la portion d'ancrage (42) étant fixée à la substance de base, la portion mobile (41) étant séparée de et opposée à la première électrode (20), une partie (42b) de la portion d'ancrage (42) étant isolée électriquement par rapport à la portion mobile (41),
dans lequel la portion d'ancrage (42) comprend une première région (42a) connectée électriquement à la portion mobile (41) et une seconde région (42b) isolée électriquement par rapport à la portion mobile (41) et à la première région (42a), et
la portion mobile (41) et la portion d'ancrage (42) sont composées d'un matériau conducteur identique, et
des fentes (62, 63) pour isoler la seconde région (42b) par rapport à la portion mobile (41) et à la première région (42a) sont fournies dans la portion d'ancrage (42), un film isolant (36) étant incrusté dans les fentes (62, 63),
une fente (62) de la pluralité de fentes (62, 63) entoure la portion mobile (41) sauf la première région (42a),
et au moins une autre fente (63) de la pluralité de fentes (62, 63) isole électriquement la première région (42a) par rapport à la seconde région (42b),
un plot d'électrode (51) est fourni dans la première région (42a).

2. Dispositif à MEMS selon la revendication 1, **caractérisé en ce que** la seconde électrode (40) comprend des trous (61) perpendiculaires à une surface principale de la substance de base dans la portion mobile (41).

3. Dispositif à MEMS selon l'une quelconque de la revendication 1 ou de la revendication 2, **caractérisé en ce que** la seconde électrode (40) est en SiGe.

4. Dispositif à MEMS selon l'une quelconque de la revendication 1 à la revendication 3, **caractérisé en ce qu'**un film isolant protecteur (37) est en outre fourni sur la seconde électrode (40).

5. Dispositif à MEMS selon l'une quelconque de la revendication 1 à la revendication 4, **caractérisé en ce que** la substance de base comprend un substrat semiconducteur (10) et un film isolant intercouche (11) fourni sur le substrat semiconducteur (10).
